# EUROPEAN PATENT APPLICATION

(11) **EP 2 792 538 A2**
(43) Date of publication of application: **22.10.2014**
(21) Application number: 14165059.8
(22) Date of filing: 17.04.2014
(51) Int. Cl.: B60L 11/18

(54) **System and method for selecting an electric vehicle charging station**

(30) Priority: 19.04.2013 US 201361814009 P; 11.04.2014 US 201414250414
(71) Applicant: Honda Motor Co., Ltd., Tokyo 107-8556 (JP)
(72) Inventor: Uyeki, Robert M., Raymond, OH Ohio 43067-9705 (US)
(74) Representative: Herzog, Markus

(57) **Abstract**

A computer-implemented method for providing an electric vehicle charging station recommendation includes receiving, at a remote server including a processor, a charge request from a vehicle computing device associated with an electric vehicle and determining at least one compatible charging station from one or more charging stations based on a comparison of the charge request to charging station data stored in a charging station database at the remote server. The method includes determining an availability status of the at least one compatible charging station based on whether real-time availability data can be obtained from the at least one compatible charging station and selecting at least one compatible charging station with an availability status in accordance with the charge request. The method includes providing information associated with the selected at least one compatible charging station to the vehicle computing device associated with the electric vehicle.

## Description

### RELATED APPLICATIONS

This application claims priority to U.S. Provisional Patent Application Ser. No. 61/814009 titled SYSTEM AND METHOD FOR SELECTING AN ELECTRIC VEHICLE CHARGING STATION and filed April 19, 2013, the content of which is incorporated by reference herein in its entirety.

### BACKGROUND

Electric vehicles can contain electric storage mechanisms (e.g., electric engines powered by rechargeable batteries) to store electricity and power the electric vehicle. The electric storage mechanisms can be replenished periodically by using, for example, charging equipment installed at a residential home or charging equipment installed at a charging station. Charging stations can be networked or non-networked and include one or more chargers configured to connect and recharge electric vehicles. Drivers of electric vehicles typically need access to current and reliable charging station information, including, but not limited to, location, availability and accessibility information of chargers at said charging stations.

### BRIEF DESCRIPTION

According to one aspect, a computer-implemented method for selecting an electric vehicle charging station is provided. The method can include receiving, at a remote server having a processor, a charge request from a vehicle computing device associated with an electric vehicle and determining at least one compatible charging station from one or more charging stations based on a comparison of the charge request to charging station data stored in a charging station database at the remote server. The method can include determining an availability status of the at least one compatible charging station based on whether real-time availability data can be obtained from the at least one compatible charging station and selecting at least one compatible charging station with an availability status in accordance with the charge request. The method can include providing information associated with the selected at least one compatible charging station to the vehicle computing device associated with the electric vehicle.

According to another aspect, a computer-implemented method for selecting an electric vehicle charging station is provided. The method can include transmitting a charge request from a vehicle computing device associated with an electric vehicle to a remote server. The method can include receiving at the vehicle computing device a selection of at least one compatible charging station from the remote server, wherein the at least one compatible charging station is determined by the remote server from one or more charging stations based on a comparison of the charge request to charging station data stored in a charging station database communicatively coupled to the remote server. The at least one compatible charging station is also determined based on an availability status in accordance with the charge request, the availability status based on whether real-time availability data can be obtained from the at least one compatible charging station. The method can include outputting information associated with the selected at least one compatible charging station.

According to a further aspect, a system for selecting an electric vehicle charging station is provided. The system can include a remote server, having a processor, the remote server communicatively coupled to a vehicle computing device associated with an electric vehicle and the remote server communicatively coupled to a charging station database. The processor can include a receiving module that receives a charge request from the device associated with the electric vehicle and a selection module that determines at least one compatible charging station from one or more charging stations based on a comparison of the charge request to charging station data stored at the charging station database of the remote server. The selection module can determine an availability status of the at least one compatible charging station based on whether real-time availability data can be obtained from the at least one compatible charging station. The selection module can select at least one compatible charging station with an availability status in accordance with the charge request. An output module can provide information associated with the recommended charging station to the vehicle computing device associated with the electric vehicle.

### BRIEF DESCRIPTION OF THE DRAWINGS

The novel features believed to be characteristic of the disclosure are set forth in the appended claims. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The disclosure itself, however, as well as a preferred mode of use, further objectives and advantages thereof, will be best understood by reference to the following detailed description of illustrative embodiments when read in conjunction with the accompanying drawings, wherein:
FIG. 1 is a schematic view of an exemplary system for selecting an electric vehicle charging station according to an embodiment;
FIG. 2 is a schematic view of an exemplary electric vehicle architecture of the electric vehicle of FIG. 1 according to an embodiment;
FIG. 3 is a schematic view of an exemplary remote server architecture of the remote server of FIG. 1 according to an embodiment;
FIG. 4 is a flow chart of an exemplary method for selecting an electric vehicle charging station according to an embodiment;
FIG. 5 is a flow chart of an exemplary method for determining an availability status of the method of FIG. 4 according to an embodiment;
FIG. 6 is a flow chart of an exemplary method for selecting an electric vehicle charging station according to an embodiment;
FIG. 7 is a chart of exemplary historical charger information according to an embodiment; and
FIG. 8 is an exemplary output of information associated with electric vehicle charging stations that can be displayed to a driver of an electric vehicle according to an embodiment.

### DETAILED DESCRIPTION

The following includes definitions of selected terms employed herein. The definitions include various examples and/or forms of components that fall within the scope of a term and that can be used for implementation. The examples are not intended to be limiting.

A "bus", as used herein, refers to an interconnected architecture that is operably connected to other computer components inside a computer or between computers. The bus can transfer data between the computer components. The bus can a memory bus, a memory controller, a peripheral bus, an external bus, a crossbar switch, and/or a local bus, among others. The bus can also be a vehicle bus that interconnects components inside a vehicle using protocols such as Controller Area network (CAN), Local Interconnect Network (LIN), among others.

"Computer communication", as used herein, refers to a communication between two or more computing devices (e.g., computer, personal digital assistant, cellular telephone, network device) and can be, for example, a network transfer, a file transfer, an applet transfer, an email, a hypertext transfer protocol (HTTP) transfer, and so on. A computer communication can occur across, for example, a wireless system (e.g., IEEE 802.11), an Ethernet system (e.g., IEEE 802.3), a token ring system (e.g., IEEE 802.5), a local area network (LAN), a wide area network (WAN), a point-to-point system, a circuit switching system, a packet switching system, among others.

A "computer-readable medium", as used herein, refers to a medium that provides signals, instructions and/or data. A computer-readable medium can take forms, including, but not limited to, non-volatile media and volatile media. Non-volatile media can include, for example, optical or magnetic disks, and so on. Volatile media can include, for example, semiconductor memories, dynamic memory, and so on. Common forms of a computer -readable medium include, but are not limited to, a floppy disk, a flexible disk, a hard disk, a magnetic tape, other magnetic medium, other optical medium, a RAM (random access memory), a ROM (read only memory), and other media from which a computer, a processor or other electronic device can read.

A "data store", as used herein can be, for example, a magnetic disk drive, a solid state disk drive, a floppy disk drive, a tape drive, a Zip drive, a flash memory card, and/or a memory stick. Furthermore, the disk can be a CD-ROM (compact disk ROM), a CD recordable drive (CD-R drive), a CD rewritable drive (CD-RW drive), and/or a digital video ROM drive (DVD ROM). The disk can store an operating system that controls or allocates resources of a computing device. The data store can also refer to a database, for example, a table, a set of tables, a set of data stores (e.g., a disk, a memory, a table, a file, a list, a queue, a heap, a register) and methods for accessing and/or manipulating those data in those tables and data stores. The data store can reside in one logical and/or physical entity and/or can be distributed between two or more logical and/or physical entities.

A "memory", as used herein can include volatile memory and/or non-volatile memory. Non-volatile memory can include, for example, ROM (read only memory), PROM (programmable read only memory), EPROM (erasable PROM), and EEPROM (electrically erasable PROM). Volatile memory can include, for example, RAM (random access memory), synchronous RAM (SRAM), dynamic RAM (DRAM), synchronous DRAM (SDRAM), double data rate SDRAM (DDR SDRAM), and direct RAM bus RAM (DRRAM). The memory can store an operating system that controls or allocates resources of a computing device.

A "networked charging station," as used herein includes charging stations that are part of a private group and are only accessible to members of the group or require special subscriptions and/or memberships.

A "non-networked charging station," as used herein includes charging stations that are generally accessible to the public without special membership or subscription requirements.

An "operable connection", or a connection by which entities are "operably connected", is one in which signals, physical communications, and/or logical communications can be sent and/or received. An operable connection can include a physical interface, a data interface and/or an electrical interface.

A "processor", as used herein, processes signals and performs general computing and arithmetic functions. Signals processed by the processor can include digital signals, data signals, computer instructions, processor instructions, messages, a bit, a bit stream, or other means that can be received, transmitted and/or detected. Generally, the processor can be a variety of various processors including multiple single and multicore processors and co-processors and other multiple single and multicore processor and co-processor architectures. The processor can include various modules to execute various functions.

A "portable device", as used herein, is a computing device typically having a display screen with user input (e.g., touch, keyboard) and a processor for computing. Portable devices include, but are not limited to, handheld devices, mobile devices, smart phones, laptops, tablets and e-readers.

An "electric vehicle" (EV), as used herein, refers to any moving vehicle that is capable of carrying one or more human occupants and is powered entirely or partially by one or more electric motors powered by an electric battery. The EV can include battery electric vehicles (BEVs), plug-in hybrid electric vehicles (PHEVs) and extended range electric vehicles (EREVs). The term "vehicle" includes, but is not limited to: cars, trucks, vans, minivans, SUVs, motorcycles, scooters, boats, personal watercraft, and aircraft.

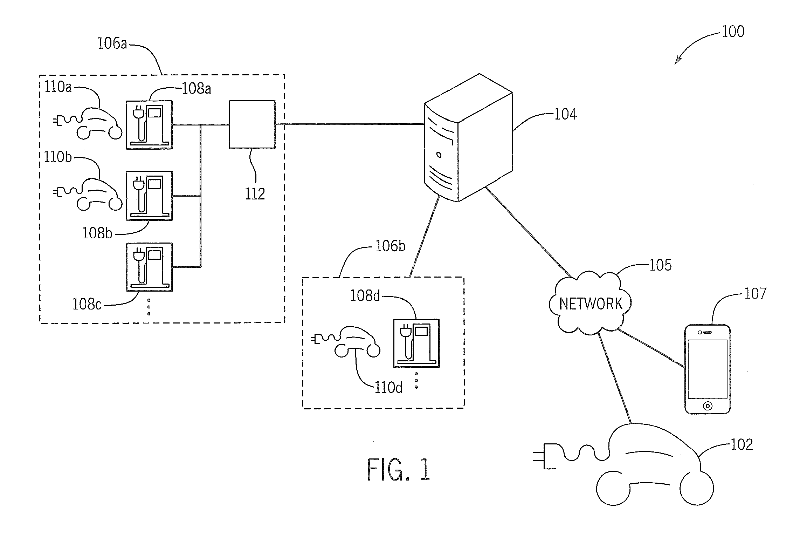

Referring now to the drawings, wherein the showings are for purposes of illustrating one or more exemplary embodiments and not for purposes of limiting same, FIG. 1 illustrates exemplary system 100 for selecting an electric vehicle charging station according to an embodiment. The components of the system 100, as well as the components of other systems and architectures discussed herein, can be combined, omitted or organized into different architectures for various embodiments. In the illustrated embodiment shown in FIG. 1, the system 100 includes an electric vehicle (EV) 102, a remote server 104, a first charging station 106a and a second charging station 106b. The system 100 can also include a portable device 107, located inside or outside of the EV 102. The server 104 is operably connected for computer communication with the EV 102 and the electric charging stations 106a, 106b via a wireless network 105 to facilitate selecting an electric vehicle charging station to the EV 102. Although two charging stations are illustrated in FIG. 1, the system 100 can include one or any number of charging stations.

The first charging station 106a includes chargers 108a, 108b and 108c. Each charger can be located within a charging bay in which an electric vehicle can pull up and connect to the charger. Each charger replenishes the electric storage mechanism (e.g., battery) using an energy source. Energy sources can include clean renewable energy and non-renewable energy. Clean renewable energy can include, solar energy, hydro energy, biomass energy, windy energy, among others. Non-renewable energy can include electricity from a grid source, and in the case of hybrid vehicles, fossil fuels.

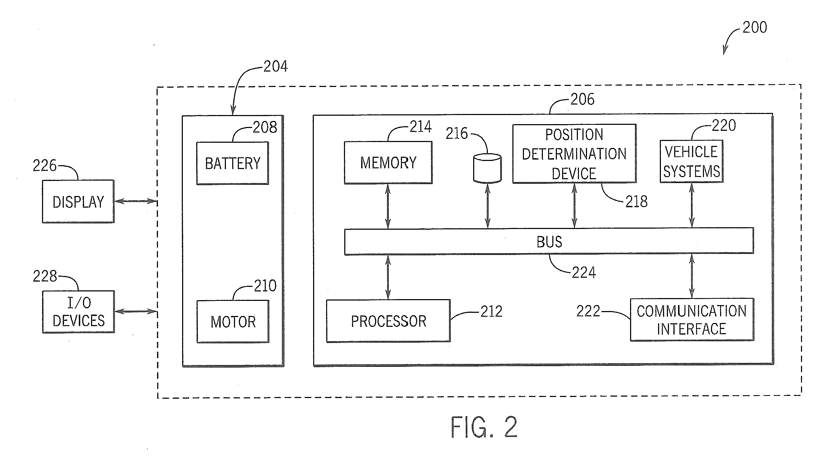

In the embodiment illustrated in FIG. 1, electric vehicles 110a and 110b are coupled for charging to the chargers 108a and 108b respectively. The electric vehicles 110a and 110b can be similar to the structure and functionality of the EV 102. The chargers 108a, 108b and 108c can include hardware and/or software components to allow computer communication and data exchange between the chargers 108a, 108b and 108c, a local charging station database 112 and the remote server 104. Chargers with this type of communication capability can be referred to herein as "smart" chargers. In one embodiment, the vehicles 110a, 110b can include a vehicle computing device (e.g., a telematics system, a navigation system, a portable device; See FIG. 2) that is capable of computer communication with the smart chargers 108a, 108b and 108c, the local charging station database 112 and/or the remote server 104. In other embodiments, a portable device associated and connected to the vehicle (e.g., similar to the portable device 107 in possession of a driver, a passenger) can be capable of computer communication with the smart chargers 108a, 108b and 108c, the local charging station database 112 and/or the remote server 104. In FIG. 1, the first charging station 106a illustrates two electric vehicles 110a and 110b, however, the first charging station 106a can have any number of electric vehicles and/or charging stations.

The second charging station 106b can include a charger 108d coupled to an electric vehicle 110d. Although the second charging station 106b includes on electric vehicle 110d and one charging station 108d, the second charging station 106b can include any number of electric vehicles and/or charging stations. The second charging station 106b can include the same or similar components and functionality as the first charging station 106a discussed above. Similarly, the electric vehicle 110d can include the same or similar components and functionality as the electric vehicles 110a, 110b and the EV 102.

Referring now to FIG. 2, an exemplary electric vehicle architecture 200 of the electric vehicle 102 of FIG. 1 is provided according to an embodiment. The electric vehicle 102 can include a propulsion control 204 and a vehicle computing device 206 (e.g., a telematics system, a navigation system, an electronic control unit). The propulsion control 204 can power the electric vehicle 102 by one or more rechargeable batteries, for example a battery 208, and one or more motors, for example, an electric motor 210. The battery 208 can be charged when the electric vehicle 102 is connected to an outside power source. For example, the battery 208 can be charged by connecting the electric vehicle 102 to a charger (e.g., chargers 108a, 108b, 108c and 108d, FIG.1) that draws power from a power grid. In one embodiment, the vehicle 202 is purely electric in that is only has an electric motor 210. In other embodiments, the electric vehicle 102 can have an electric motor and internal combustion engine. In some embodiments, the electric vehicle 102 can have any number of electric motors and/or internal combustion engines and they can operate in series (e.g., as in an extended range electric vehicle), in parallel, or some combination of series and parallel operation.

The vehicle computing device 206 of the electric vehicle 102 can include provisions for processing, communicating and interacting with various components of the electric vehicle 102 (FIG. 2) and other components of the system 100 (FIG. 1). The computing device 206 can include a processor 212, a memory 214, a data store 216, a position determination device (e.g., GPS, navigation unit) 218, a plurality of vehicle systems 220 and a communication interface 222. The components of the architecture 200, including the vehicle computing device 202, can be operably connected for computer communication via a bus 224 (e.g., a Controller Area Network (CAN) or a Local Interconnect Network (LIN) protocol bus) and/or other wired and wireless technologies. The vehicle computing device 206 as well as the EV 102 can include other components and systems not shown.

The processor 212 and/or the memory 214 can include various modules and/or logic to facilitate selecting an electric vehicle charging station. The communication interface 222 provides software, firmware and/or hardware to facilitate data input and output between the components of the computing device 206 and other components, networks and data sources. Further, the communication interface 222 can facilitate communication with a display 226 (e.g., a head unit, a display stack, a heads-up display) in the EV 102 and other input/output devices 228, for example, a portable device (e.g., the portable device 107 of FIG. 1) connected to the EV 102. In some embodiments the portable device, can include some or all of the components and functionality of the vehicle computing device 206. For example, in some embodiments, the portable device can include provisions and functions to determine a position of the EV 102, similar to the position determination device 218. The portable device can also exchange vehicle data with the propulsion control 204 and/or the vehicle computing device 206. In some embodiments, the portable device can communicate vehicle data to components of system 100, for example, the remote server 104.

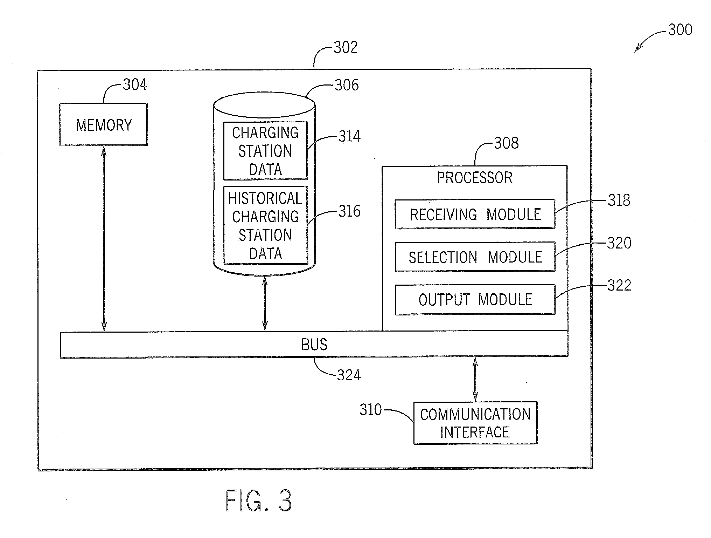

Referring again to FIG. 1, the remote server 104 maintains a data store of information received and/or obtained from the charging station 106a (e.g., from the local charging station data store 112), that charging station 106b, the chargers 108a -108d and/or the vehicles 110a, 110b and 110d. FIG. 3 provides an exemplary remote server architecture 300 of the remote server 104 of FIG. 1 according to an embodiment. The remote server 104, is located remotely (i.e., off-board) from the EV 102 (FIG. 1) and, in some embodiments, can be maintained by an Original Equipment Manufacturer (e.g., of the EV 102), a utility company, a charging service provider, a regulatory body, among others. Additionally, in some embodiments, the remote server 104 can be another type of remote device or supported by a cloud architecture.

Specifically, the remote server 104 includes a computing device 302 with a memory 304, a data store 306, a processor 308 and a communication interface 310. The components of the architecture 300, including the computing device 302, can be operably connected for computer communication via a bus 324 and/or other wired and wireless technologies. The computing device 302 as well as the remote server 104 can include other components and systems not shown.

The data store 306 includes charging station data 314 and historical charging station data 316. The charging station data 314 includes compatibility data about each charging station and each charger at each of said charging stations. For example, the charging station data 314 can include, but is not limited to, a charging station identifier, a charger identifier, charging station location, charging station hours of operation, charging station website, charging station contact information, charger (e.g., charging bay) location information, charger type, charger capabilities, charger compatibility, price information, time of use (TOU) rates, whether the charging station is networked (private) or non-networked (public), subscription fees or membership information for a particular charging station and network.

Additionally, the charging station data 314 can include real-time information. For example, real-time availability (e.g., available, not available, expected to be available), a real-time charger status (e.g., currently charging, not charging), a state of charge (SOC) of a battery currently being recharged by a charger (or the SOC of the battery when the charging began), the amount of time left for charging to fully charge the battery (or the amount of charger requested by the current driver), price information, time of use (TOU) rates, whether the charging station is networked (private) or non-networked (public), subscription fees or membership information for a particular charging station and network memberships of a particular vehicle and/or customer.

The historical charging station data 316 includes usage profiles for each charging station and each charger at each of said charging stations. For example, the usage profiles include usage data (e.g., whether the charger is available (e.g., not in use) or not available (e.g., in use, currently charging a vehicle) by date and time. Accordingly, the usage profiles provide historical charging station availability by charger (e.g., by charging bay) according to a date, day of week and/or time. In some embodiments, the charging station data 314 and the historical charging station data 316 can be combined into one database or table. According to one embodiment discussed herein, if real-time information from a charging station is not available, a historical charging station availability status can be determined based on the historical charging station data 316.

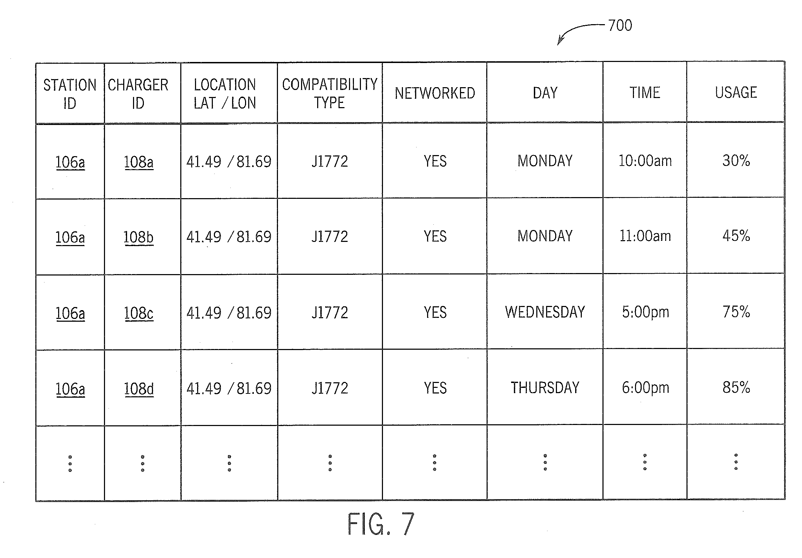

FIG. 7 illustrates an exemplary table 700 of historical charging station data 316. As mentioned above, the historical charging station data 316 can include usage data by date, day of week and time for each charger. Based on the historical charging station data 316, the selection module 220 can aggregate usage data by a particular time and data and calculate a probability of availability for a particular charger. For example, the charger 108a has a usage of 30% at 10:00am on Mondays. Thus, the selection module 320 can calculate a probability of availability of 70% based on a charge request from the electric vehicle 102 for 10:00am on a Monday.

Referring again to FIG. 3, the charging station data 314 and/or the historical charging station data 316 can be transmitted in real-time to the remote server 104 by the charging station and/or the charger. In another embodiment, the charging station data 314 and/or the historical charging station data 316 is transmitted to the remote server at predetermined times and/or upon a predetermined event (e.g., vehicle connects to a charger; vehicle disconnects from a charger, etc.). In some embodiments, the charging station or the charger may not be capable of communicating with the remote server 104 (i.e., not a "smart charger). When the charging station or the charger is not capable of communicating with the remote server 104, then a vehicle computing device and/or portable device associated with the charger can transmit the charging station data 314 and/or the historical charging station data 316 to the remote server 104, however, the vehicle computing device and/or portable device could also provide said data even if the charging station or the charger is capable of communicating with the remote server 104.

In other embodiments, the remote server 104 requests and/or obtains the charging station data 314 and/or the historical charging station data 316 from the charging station, the charger, or a vehicle computing device and/or portable device associated with the charger. The remote server 104 can request and/or obtain said data at predetermined times and/or upon a predetermined event (e.g., vehicle connects to a charger; vehicle disconnects from a charger, etc.).

In the illustrated embodiment shown in FIG. 3, the processor 308 can include provisions for processing, communicating and interacting with various components of the remote server 104 and other components of the system 100 (FIG. 1). In particular, the processor 308 includes a receiving module 318, a selection module 320 and an output module 322, which will be described in more detail herein.

An exemplary system for selecting an electric vehicle charging station in operation will now be described with reference to FIGS. 1-3. A system for selecting an electric vehicle charging station can include a remote server having a processor, the remote server communicatively coupled to a vehicle computing device associated with an electric vehicle and the remote server communicatively coupled to a charging station database. For example, the remote server 104 includes a processor 308 and the remote server 104 is communicatively coupled to a vehicle computing device 206 of the EV 102 via, for example, via the network 105.

As discussed above, the processor 308 includes the receiving module 318, the selection module 320 and the output module 322. The receiving module receives a charge request from the vehicle computing device associated with the electric vehicle. For example, the receiving module 318 can receive a charge request transmitted from the vehicle computing device 206 of the EV 102. The charge request indicates that the EV 102 and/or a driver of the EV 102 desires or needs to recharge the battery 208.

In particular, the charge request includes vehicle data associated with the EV 102, the plurality of vehicle systems 220, position data (e.g., from the position determination device 218) and charging parameters and/or preferences. The vehicle data can include, but is not limited to, a current state of charge (SOC), a battery type, a plug type, an energy type, a current position, a destination, a current date, time, day of week, a future date, time, day of week, preferred charging preferences (e.g., energy type, charging time preferences), price preferences (e.g., time of use rates), among others.

The selection module 318 can determine at least one compatible charging station from one or more charging stations based on a comparison of the charge request to charging station data stored at the charging station database of the remote server. As an illustrative example, a charge request can include a plug type equal to 1 (e.g., SAE J1772), an SOC of 54%, a current position and a destination. Based on the charge request, the selection module 318 queries the data store 306 for a compatible charging station (e.g., a charging station that supports the plug type and is at a location based on the SOC, the current position and the destination). The compatible charging station can also indicate a compatible charger or bay.

The selection module 318 also determines an availability status of the at least one compatible charging station based on whether real-time availability data can be obtained from the at least one compatible charging station. The selection module 318 determines whether real-time availability data can be obtained from the at least one compatible charging station based on a connectivity status of the at least one compatible charging station.

The connectivity status can be determined in several ways. In one embodiment, the connectivity status is determined based on whether a real-time connection can be established between the at least one compatible charging station and the remote server 104. For example, if the communication interface 310 of the remote server 104 can establish a real-time connection with the at least one compatible charging station, and the communication interface 310 is operably connected for computer communication (e.g., can send and receive data) to the at least one compatible charging station, then real-time availability data can be obtained and used to determine an availability status. In another embodiment, the remote server 104 can query the charging station data 314 to determine a connectivity status. For example, if the charging station data 314 indicates that information has been recently updated for the at least one compatible charging station, then real-time availability data can be obtained and used to determine an availability status.

If real-time availability data cannot be obtained, the historical charging station data 316 can be used to determine an availability status of the at least one compatible charging station. Specifically, the selection module 318 selects at least one compatible charging station with an availability status in accordance with the charge request. The selection module determines the availability status based on historical charging station availability data from the charging station database upon determining that real-time availability data cannot be obtained from the at least one compatible charging station. Specifically, if real-time availability data cannot be obtained, the selection module 318 queries the historical charging station data 316 to determine the availability status in accordance with the charge request. In one embodiment, the selection module 318 determines a probability that the at least one compatible charging station is available based on the historical charging station availability data from the charging station database. In one embodiment, the selection module 318 performs a trend analysis of the historical charging station data 316 to determine the probability that the at least one compatible charging station is available.

After the selection module 318 selects at least one compatible charging station with an availability status in accordance with the charge request, the output module 322 provides information associated with at least one selected charging station to the vehicle computing device associated with the electric vehicle. In one embodiment, the output module 322 provides information on whether the selected at least one compatible charging station is networked or non-networked.

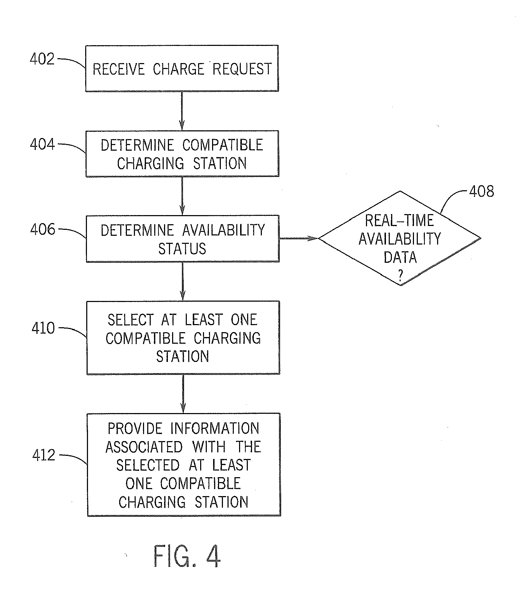

Referring now to FIG. 4, an exemplary method for selecting an electric vehicle charging station according to an embodiment is illustrated. The method of FIG. 4 illustrates a server side (i.e., the remote server 104) for selecting an electric vehicle charging station. However, the method of FIG. 4 could also be performed at the computing device 206 of the EV 102. The method of FIG. 4 will be discussed in association with the system 100 and FIGS. 1-3, however the method could also be used with other systems. Throughout the description, the terms "charging stations" and "chargers" can be interchanged. In some embodiments a charging station, including a plurality of charging stations, can be selected or a single charger at a charging station can be selected.

In the embodiment illustrated in FIG. 4, at block 402, the method includes receiving, at a remote server including a processor, a charge request from a vehicle computing device associated with an electric vehicle. The charge request indicates that the electric vehicle 102 and/or a driver of the electric vehicle 102 desires or needs to recharge the battery 208. The charge request can be initiated and/or transmitted by the driver or automatically by the electric vehicle 102. For example, the processor 212 can be configured to automatically transmit a charge request to the remote server 104 upon detection of a predetermined event (e.g., a state of charge (SOC) threshold). The charge request can be transmitted from the electric vehicle 102 or from the portable device 107.

As discussed above, the charge request includes vehicle data, the vehicle data including at least charge characteristics of the electric vehicle and temporal data of the charge request. In particular, the charge request includes vehicle data associated with the EV 102, the plurality of vehicle systems 220, position data (e.g., from the position determination device 218) and charging parameters and/or preferences. The vehicle data can include, but is not limited to, a current state of charge (SOC), a battery type, a plug type, an energy type, a current position, a destination, a current date, time, day of week, a future date, time, day of week, preferred charging preferences (e.g., energy type, charging time preferences), price preferences (e.g., time of use rates), among others.

At block 404, the method includes determining at least one compatible charging station from one or more charging stations based on a comparison of the charge request to charging station data stored in a charging station database at the remote server. Based on the charge request, the selection module 318 queries the data store 306 for a compatible charging station (e.g., a charging station that supports the requirements of the charge request). The compatible charging station can also specify a compatible charger or bay.

At block 406, the method includes determining an availability status of the at least one compatible charging station. Specifically, the availability status is based on whether real-time availability data can be obtained from the at least one compatible charging station as illustrated at block 408. In one embodiment, determining whether real-time availability data can be obtained from the at least one compatible charging station is based on a connectivity status of the at least one compatible charging station.

The connectivity status can be determined in several ways. In one embodiment, the connectivity status is determined based on whether a real-time connection can be established between the at least one compatible charging station and the remote server 104. For example, if the communication interface 310 of the remote server 104 can establish a real-time connection with the at least one compatible charging station, and the communication interface 310 is operably connected for computer communication (e.g., can send and receive data) to the at least one compatible charging station, then real-time availability data can be obtained and used to determine an availability status. In another embodiment, the remote server 104 can query the charging station data 314 to determine a connectivity status. For example, if the charging station data 314 indicates that information has been recently updated for the at least one compatible charging station, then real-time availability data can be obtained and used to determine an availability status.

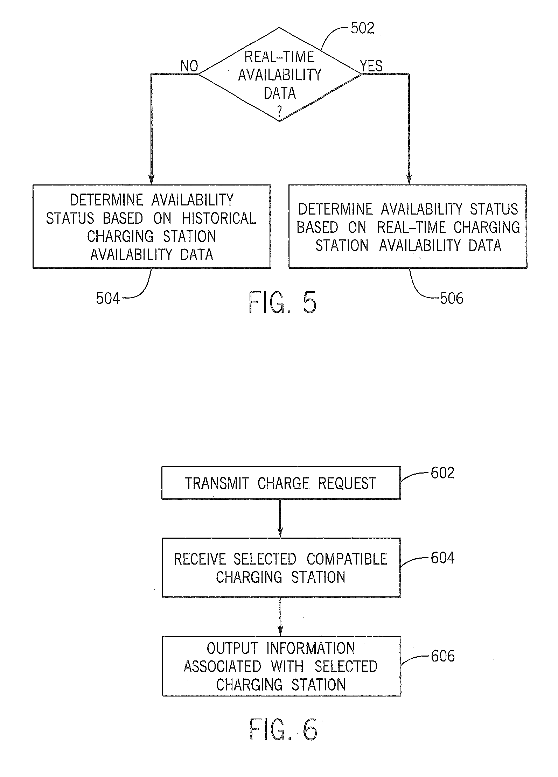

FIG. 5 illustrates a flow chart of an exemplary method for determining an availability status of the method of FIG. 4 according to an embodiment. Specifically, upon determining that real-time availability data cannot be obtained from the at least one compatible charging station at block 502, the method includes determining the availability status based on historical charging station availability data from the charging station database at block 504. For example, the historical charging station data 316 can include aggregated usage data of charging stations and chargers by date and time. A trend analysis can be performed by the selection module 320 to determine an availability status based on the historical charging station data 316. However, upon determining that real-time availability data can be obtained from the at least one compatible charging station at block 502, the method includes determining the availability status based on real-time charging station availability data.

Referring again to FIG. 4, at block 410, the method includes selecting at least one compatible charging station with an availability status in accordance with the charge request. In one embodiment, selecting at least one compatible charging station with an availability status in accordance with the charge request includes determining a probability that the at least one compatible charging station is available based on the historical charging station availability data from the charging station database.

Further, at block 412, the method includes providing information associated with the selected at least one compatible charging station to the vehicle computing device associated with the electric vehicle. For example, the output module 322 can transmit information associated with the selected at least one compatible charging station to the vehicle computing device 206. The vehicle computing device 206 can then transmit the information to an I/O device 228 for display. In one embodiment, providing information associated with the selected at least one compatible charging station to the device associated with the electric vehicle includes providing information on whether the selected at least one compatible charging station is networked or non-networked.

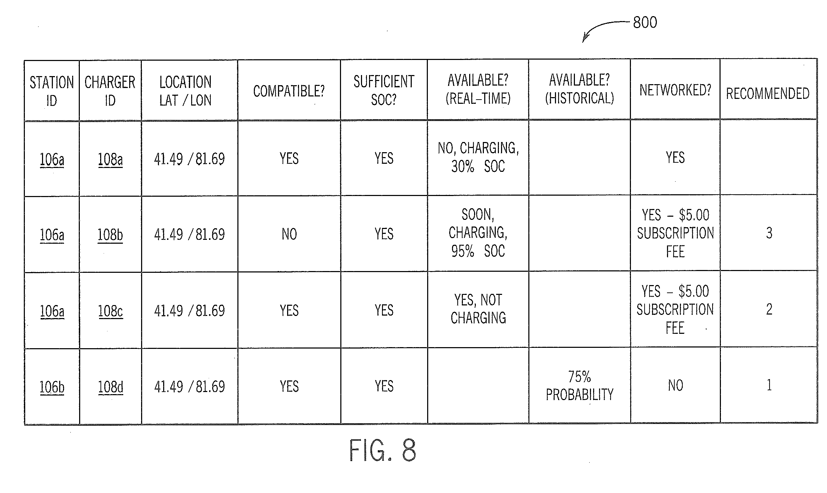

FIG. 8 illustrates an exemplary user interface 800. The interface 800 includes the headings "Station ID," "Charger ID," "Location," "Compatible?," "Available (Real-Time)?," "Available (Historical)?", "Networked?" and "Recommended." The Available (Real-Time) column lists a real-time availability status of a charger along with a SOC of a vehicle currently charging. As discussed above, a time when the charger is expected to be available can also be calculated and displayed. The Available (Historical) column provides a historical availability status and/or a probability of availability based on historical charger data if a real-time availability status is not available. The Networked column provides information on whether the charger is networked or non-networked and any fees that can be associated with a networked charger. The Recommended Station column indicates which chargers are recommended and can rank the recommended chargers. A driver can select a charger via the interface and the position determination device 218 can route the electric vehicle 102 to the selected charger. Accordingly, the illustrated implementations provide a live real-time database of charging station information and historical charging station information from which a selected charger can be transmitted to a vehicle based on a charge request.

Referring now to FIG. 6, an exemplary method for selecting an electric vehicle charging station according to an embodiment is illustrated. The method of FIG. 6 illustrates a client side (i.e., the EV 102) processing for selecting an electric vehicle charging station. The method of FIG. 6 will be discussed in association with the system 100 and FIGS. 1-3, however the method could also be used with other systems. At block 602, the method includes transmitting a charge request from a vehicle computing device associated with an electric vehicle to a remote server. As discussed above, a charge request can be transmitted from the vehicle computing device 206 to the remote server 104.

At block 604, the method includes receiving at the vehicle computing device a selection of at least one compatible charging station from the remote server. For example, the vehicle computing device 206 can receive a selection of at least one compatible charging station from the remote server 104. The at least one compatible charging station is determined by the remote server 104 from one or more charging stations based on a comparison of the charge request to charging station data stored in a charging station database communicatively coupled to the remote server. For example, based on the charge request, the selection module 318 queries the data store 306 for a compatible charging station (e.g., a charging station that supports the requirements of the charge request). The compatible charging station can also specify a compatible charger or bay.

In one embodiment, the at least one compatible charging station is determined based on an availability status in accordance with the charge request and the availability status is based on whether real-time availability data can be obtained from the at least one compatible charging station. In one embodiment, the availability status indicates that real-time availability data cannot be obtained from the at least one compatible charging station. For example, if the communication interface 310 of the remote server 104 cannot establish a real-time connection with the at least one compatible charging station and/or the communication interface 310 is not operably connected for computer communication (e.g., cannot send and receive data) to the at least one compatible charging station, then real-time availability data cannot be obtained.

Upon determining that real-time availability data cannot be obtained from the at least one compatible charging station, the remote server determines the availability status based on historical charging station availability data received from the charging station database. The historical charging station availability data includes aggregated usage data of charging stations by date and time. For example, the historical charging station data 316 can include aggregated usage data of charging stations and chargers by date and time. A trend analysis can be performed by the selection module 320 to determine an availability status based on the historical charging station data 316. In a further embodiment, the selected at least one compatible charging station is based on a probability that the at least one compatible charging station is available based on the historical charging station availability data from the charging station database.

At block 606, the method includes outputting information associated with the selected at least one compatible charging station. The vehicle computing device 206 can then transmit the information to an I/O device 228 for display. In one embodiment, the vehicle computing device determining a best charging station based on the greatest probability that the selected at least one compatible charging station is available. Accordingly, the illustrated implementations provide a live real-time database of charging station information and historical charging station information from which a selected charger can be transmitted to a vehicle based on a charge request.

The embodiments discussed herein can also be described and implemented in the context of computer-readable storage medium storing computer executable instructions. Computer-readable storage media includes computer storage media and communication media. For example, flash memory drives, digital versatile discs (DVDs), compact discs (CDs), floppy disks, and tape cassettes. Computer-readable storage media can include volatile and nonvolatile, removable and non-removable media implemented in any method or technology for storage of information such as computer readable instructions, data structures, modules or other data. Computer-readable storage media excludes non-transitory tangible media and propagated data signals.

It will be appreciated that various implementations of the above-disclosed and other features and functions, or alternatives or varieties thereof, can be desirably combined into many other different systems or applications. Also that various presently unforeseen or unanticipated alternatives, modifications, variations or improvements therein can be subsequently made by those skilled in the art which are also intended to be encompassed by the following claims.

A computer-implemented method for providing an electric vehicle charging station recommendation includes receiving, at a remote server including a processor, a charge request from a vehicle computing device associated with an electric vehicle and determining at least one compatible charging station from one or more charging stations based on a comparison of the charge request to charging station data stored in a charging station database at the remote server. The method includes determining an availability status of the at least one compatible charging station based on whether real-time availability data can be obtained from the at least one compatible charging station and selecting at least one compatible charging station with an availability status in accordance with the charge request. The method includes providing information associated with the selected at least one compatible charging station to the vehicle computing device associated with the electric vehicle.

## Claims

1. A computer-implemented method for selecting an electric vehicle charging station, comprising:
receiving, at a remote server including a processor, a charge request from a vehicle computing device associated with an electric vehicle;
determining at least one compatible charging station from one or more charging stations based on a comparison of the charge request to charging station data stored in a charging station database at the remote server;
determining an availability status of the at least one compatible charging station based on whether real-time availability data can be obtained from the at least one compatible charging station;
selecting at least one compatible charging station with an availability status in accordance with the charge request; and
providing information associated with the selected at least one compatible charging station to the vehicle computing device associated with the electric vehicle.

2. The computer-implemented method of claim 1, wherein the charge request includes vehicle data, the vehicle data including at least charge characteristics of the electric vehicle and temporal data of the charge request.

3. The computer-implemented method of claim 1 or 2, wherein determining whether real-time availability data can be obtained from the at least one compatible charging station is based on a connectivity status of the at least one compatible charging station.

4. The computer-implemented method of any of claims 1 to 3, wherein upon determining that real-time availability data cannot be obtained from the at least one compatible charging station, determining the availability status based on historical charging station availability data from the charging station database,
and wherein, preferably, historical charging station availability data includes aggregated usage data of charging stations by date and time.

5. The computer-implemented method of claim 4, wherein selecting the at least one compatible charging station with an availability status in accordance with the charge request includes determining a probability that the at least one compatible charging station is available based on the historical charging station availability data from the charging station database,
and wherein, preferably, selecting the at least one compatible charging station with an availability status in accordance with the charge request includes selecting the at least one compatible charging station with a greatest probability that the at least one compatible charging station is available.

6. The computer-implemented method of any of claims 1 to 5, wherein providing information associated with the selected at least one compatible charging station to the device associated with the electric vehicle includes providing information on whether the selected at least one compatible charging station is networked or non-networked.

7. A computer-implemented method for selecting an electric vehicle charging station, comprising:
transmitting a charge request from a vehicle computing device associated with an electric vehicle to a remote server; and
receiving at the vehicle computing device a selection of at least one compatible charging station from the remote server, wherein the at least one compatible charging station is determined by the remote server from one or more charging stations based on a comparison of the charge request to charging station data stored in a charging station database communicatively coupled to the remote server, and wherein the at least one compatible charging station is determined based on an availability status in accordance with the charge request, the availability status based on whether real-time availability data can be obtained from the at least one compatible charging station; and
outputting information associated with the selected at least one compatible charging station.

8. The computer-implemented method of claim 7, wherein upon determining that real-time availability data cannot be obtained from the at least one compatible charging station, the remote server determines the availability status based on historical charging station availability data from the charging station database,
and wherein, preferably, historical charging station availability data includes aggregated usage data of charging stations by date and time.

9. The computer-implemented method of claim 8, wherein the selected at least one compatible charging station is based on a probability that the at least one compatible charging station is available based on the historical charging station availability data from the charging station database,
the method, preferably, further including the vehicle computing device determining a best charging station based on the greatest probability that the selected at least one compatible charging station is available.

10. The computer-implemented method of claim 8, wherein outputting information associated with the selected at least one compatible charging station includes providing networked and non-networked information about the selected at least one compatible charging station.

11. A system for selecting an electric vehicle charging station, comprising:
a remote server including a processor, the remote server communicatively coupled to a vehicle computing device associated with an electric vehicle and the remote server communicatively coupled to a charging station database, the processor including:
a receiving module receives a charge request from the device associated with the electric vehicle;
a selection module determines at least one compatible charging station from one or more charging stations based on a comparison of the charge request to charging station data stored at the charging station database of the remote server, the selection module determines an availability status of the at least one compatible charging station based on whether real-time availability data can be obtained from the at least one compatible charging station and the selection module selects at least one compatible charging station with an availability status in accordance with the charge request; and
an output module provides information associated with the at least one selected charging station to the vehicle computing device associated with the electric vehicle.

12. The system of claim 11, wherein the selection module determines that real-time availability data cannot be obtained from the at least one compatible charging station, the remote server determines the availability status based on historical charging station availability data from the charging station database.

13. The system of claim 11 or 12, wherein the selection module determines whether real-time availability data can be obtained from the at least one compatible charging station based on a connectivity status of the at least one compatible charging station,
the selection module, preferably, determining the availability status based on historical charging station availability data from the charging station database upon determining that real-time availability data cannot be obtained from the at least one compatible charging station,
and, optionally, the selection module determining a probability that the at least one compatible charging station is available based on the historical charging station availability data from the charging station database.

14. The system of any of claims 11 to 13, wherein the output module provides information on whether the selected at least one compatible charging station is networked or non-networked.
